# EUROPEAN PATENT APPLICATION

(11) **EP 4 310 448 A1**
(43) Date of publication of application: **24.01.2024**
(21) Application number: 22794702.5
(22) Date of filing: 20.04.2022
(51) Int. Cl.: G01B 11/24

(54) **CAMERA MODULE AND ELECTRONIC APPARATUS**

(30) Priority: 29.04.2021 CN 202110476080
(71) Applicant: Huawei Technologies Co., Ltd., Shenzhen, Guangdong 518129 (CN)
(72) Inventor: YE, Haishui, Shenzhen, Guangdong 518129 (CN); YUAN, Jun, Shenzhen, Guangdong 518129 (CN); ZHANG, Weifeng, Shenzhen, Guangdong 518129 (CN)
(74) Representative: Epping - Hermann - Fischer
(86) International application number: PCT/CN2022/087889
(87) International publication number: WO 2022/228231

(57) **Abstract**

A camera module (30) includes a lens (1), an image sensor (4), and a meta-lens (6). The image sensor (4) is located on an image side of the lens (1). The meta-lens (6) is located between the lens (1) and the image sensor (4). The meta-lens (6) includes a base material (61) and a plurality of pillars (62). The plurality of pillars (62) are fastened to a side that is of the base material (61) and that faces the image sensor (4). Each pillar (62) is a rotationally symmetric structure with a rotation angle of 90°. The meta-lens (6) is configured to: split a light beam and project split light beams onto the image sensor (4), so that the camera module (30) implements multispectral imaging and has a small volume. An electronic device (100) to which the camera module (30) is applied is provided.

## Description

This application claims priority to Chinese Patent Application No. 202110476080.8, filed with the China National Intellectual Property Administration on April 29, 2021 and entitled "CAMERA MODULE AND ELECTRONIC DEVICE", which is incorporated herein by reference in its entirety.

### TECHNICAL FIELD

This application relates to the field of optical imaging technologies, and in particular, to a camera module and an electronic device.

### BACKGROUND

A spectral camera can record not only two-dimensional spatial information of a photographed object, but also spectral information of the photographed object. The spectral information shows field strength distributions at different optical wavelengths. The spectral information may be used to identify materials, enhance color reproduction, and the like. For example, in a current augmented reality (augmented reality, AR) field, like a Cyberverse (Cyberverse) system, the spectral camera can provide more refined spectral information, to improve a light rendering capability of the system. In addition, the spectral camera may also provide algorithm input for material analysis. This helps construct more real augmented reality space and improve user experience. However, a current spectral camera usually has a large volume, and is difficult to be applied to a miniaturized electronic device.

### SUMMARY

This application provides a camera module and an electronic device. The camera module can photograph a multispectral image and has a small volume.

According to a first aspect, a camera module is provided, including a lens, an image sensor, and a meta-lens. The image sensor is located on an image side of the lens, and the meta-lens is located between the lens and the image sensor. The meta-lens includes a base material and a plurality of pillars. The plurality of pillars are fastened on a side that is of the base material and that faces the image sensor. Each pillar is a rotationally symmetric structure with a rotation angle of 90°. The meta-lens has a plurality of light splitting units arranged in an array. Each light splitting unit is configured to: split a light beam into a plurality of sub-light beams based on a band, and project the sub-light beams onto the image sensor.

In this application, the camera module implements light field imaging and multispectral imaging by setting a light splitting function of the light splitting unit of the meta-lens. Therefore, reflected light of a photographed object may be collected by using one lens, and a component like a prism does not need to be used as a light splitting apparatus. In this way, image overlapping precision of a photographed multispectral image is high, and imaging quality is high. In addition, an optical system of the camera module has a small quantity of components and simple composition, so that the camera module has low costs and a small volume.

The plurality of light splitting units include a first light splitting unit, and the first light splitting unit is configured to: split a light beam into a plurality of sub-light beams in a first direction based on a band, and project the sub-light beams onto the image sensor. In the first light splitting unit, the plurality of pillars are arranged in rows in the first direction and arranged in columns in a second direction. The second direction is perpendicular to the first direction. At least some of the pillars located in a same row have different outer diameters, and the plurality of pillars located in a same column have a same outer diameter.

In this implementation, the pillar of the meta-lens uses a rotationally symmetric structure with a rotation angle of 90°. Therefore, the optical system of the camera module to which the meta-lens is applied is a polarization-independent system. Because the optical system of the camera module is a polarization-independent system, components such as a linear polarizer and a quarter-wave plate do not need to be disposed in the optical system. Composition of the optical system is simple, and components of the optical system are arranged compactly. Therefore, the camera module has a small volume, and can be well applied to a small electronic device.

In addition, because a height of a microstructure (namely, the pillar) of a meta-surface structure is at a single-digit micrometer level, an overall volume of the meta-lens is small, and a structural design difficulty of the camera module is reduced, so that a volume of the camera module is small. This facilitates application of the camera module in a miniaturized electronic device.

In some possible implementations, in the first light splitting unit, the pillar extends in a third direction, the third direction is perpendicular to the first direction and the second direction, and a shape of a cross section of the pillar is a circle, a square, or an octagon.

In some possible implementations, the plurality of pillars are arranged at an equal spacing within a range of 150 nm to 300 nm in the first direction, and the plurality of pillars are arranged at an equal spacing within a range of 150 nm to 300 nm in the second direction.

In some possible implementations, a height of the pillar in a third direction is within a range of 500 nm to 2000 nm, and the third direction is perpendicular to the first direction and the second direction.

Outer diameter sizes of the plurality of pillars that are of the first light splitting unit and that are located in a same row are designed, so that the first light splitting unit may split a light beam into a plurality of sub-light beams based on a band, and the plurality of sub-light beams are respectively projected, in the first direction, onto different positions of a light sensing unit of a corresponding image sensor.

In some possible implementations, the outer diameter of the pillar is within a range of 40 nm to 200 nm.

In some possible implementations, the pillar is made of a semiconductor material. The semiconductor material may be gallium nitride, titanium dioxide, silicon nitride, or the like.

In some possible implementations, in the first light splitting unit, outer diameter sizes of the plurality of pillars in a same row are in an oblique-trapezoid aperiodic distribution.

In some possible implementations, the base material is made of a silicon dioxide material or sapphire.

In some possible implementations, a height of the base material in a third direction is within a range of 100 µm to 500 µm, and the third direction is perpendicular to the first direction and the second direction. Because the height of the pillar of the meta-lens is very small, a thickness of the meta-lens is mainly formed by a thickness of the base material. When the thickness of the base material is less than 500 µm, the thickness of the meta-lens is very small. This facilitates miniaturization of the camera module.

In some possible implementations, the plurality of light splitting units further include a second light splitting unit. The second light splitting unit is configured to: split a light beam into a plurality of sub-light beams in the second direction based on a band, and project the sub-light beams onto the image sensor. In the second light splitting unit, the plurality of pillars are arranged in rows in the first direction and arranged in columns in the second direction. Each pillar is a rotationally symmetric structure with a rotation angle of 90°. The plurality of pillars located in a same row have a same outer diameter, and at least some pillars located in a same column have different outer diameters. For the second light splitting unit, refer to a design of the first light splitting unit.

In some possible implementations, the meta-lens further includes a light filter film. The light filter film is fastened to a side that is of the base material and that faces away from the plurality of the pillars, and the light filter film is configured to filter infrared light. In this implementation, because the meta-lens integrates a light filtering function when implementing light splitting and focusing functions, no light filter may be disposed in the camera module. This simplifies composition of components of the camera module, enables a thickness of the camera module to be small, and facilitates miniaturization of the camera module and an electronic device to which the camera module is applied. In some possible implementations, the camera module further includes a light filter. The light filter is located between the lens and the meta-lens, and the light filter is configured to filter infrared light. For example, the light filter may include a substrate and a light filter film fastened to the substrate. The substrate may be a sapphire, and a main component of the sapphire is aluminum oxide.

The light filter film may include an infrared cut-off film. For example, the infrared cut-off film is configured to filter infrared light whose wavelength is greater than 950 nm. In some implementations, the light filter film may further include an ultraviolet cut-off film, so that the light filter is further configured to filter an ultraviolet ray.

In some possible implementations, the image sensor includes a plurality of light sensing units. The plurality of light sensing units are disposed in a correspondence with the plurality of light splitting units. Sub-light beams formed by the light splitting unit are projected onto the corresponding light sensing unit.

The image sensor and the meta-lens are arranged at an interval in a thickness direction of the camera module, the image sensor and the meta-lens are parallel to each other and face each other, and a spacing between the image sensor and the meta-lens is a focal length of the meta-lens. Therefore, miniaturization of the camera module is facilitated. In some possible implementations, the meta-lens may converge light through transverse off-axis focusing, to improve focusing efficiency. In this case, the light sensing unit of the image sensor may deviate for a specific distance relative to the light splitting unit of the meta-lens. It may be understood that a size deviated by the light sensing unit relative to the light splitting unit is very small. In some implementations, the light sensing unit may alternatively face the light splitting unit without being deviated.

A transverse off-axis distance of a focused light beam passing through the meta-lens is greater than 0, and may be less than or equal to 20 µm.

In some possible implementations, the light splitting unit is configured to split a light beam into N sub-light beams based on a band, and the light sensing unit corresponding to the light splitting unit includes M pixels, where N and M are both positive integers, and M>N. In this case, the light sensing unit may receive and recognize all sub-light beams, to form relatively complete spectral information of the photographed object.

The image sensor is a monochrome sensor. After the meta-lens splits the light beam into a plurality of sub-light beams based on a wavelength, a plurality of pixels of the light sensing unit receive the plurality of sub-light beams, to form a grayscale image. The electronic device forms an image by using pixels of same spectral information, and finally forms a multispectral image.

In some possible implementations, the light splitting unit is configured to split a light beam with a wavelength range of 450 nm to 950 nm into 10 to 30 sub-light beams. In this case, a spectral resolution of the camera module is 20 nm. In this implementation, a recognizable spectral range of the camera module is wide, and covers visible light and near-infrared bands.

In some possible implementations, the camera module further includes a motor, a holder, and a circuit board. The motor and the circuit board are respectively fastened to two sides of the holder, the lens is mounted on the motor, the image sensor is fastened to the circuit board, and the meta-lens is fastened to the holder or the circuit board.

In some possible implementations, the camera module further includes a holder and a circuit board. The lens and the circuit board are respectively fastened to two sides of the holder, the image sensor is fastened to the circuit board, and the meta-lens is fastened to the holder or the circuit board.

According to a second aspect, this application further provides an electronic device, including a processor and the camera module according to any one of the foregoing implementations. The processor is in a communication connection to the camera module, and the processor is configured to: obtain image data from the camera module, and process the image data.

In this application, the camera module is a spectral camera, and is configured to record two-dimensional spatial information and spectral information of a photographed object. A user may achieve better photographing experience by using a spectral camera. For example, the user may take photos of various items commonly used in life. In addition to obtaining a very vivid photo by using an image post-processing algorithm (using spectral information to implement calibrating color reproduction), the electronic device may further detect, in combination with the spectral information and a database, information like a material and a corresponding composition proportion (like sugar content, protein, and fat) of the item in a timely manner. This facilitates user's basic necessities of life, and improves user experience. The electronic device may further include another camera module, for example, a wide-angle camera module, a long-focus camera module, or a color main camera module, to conveniently obtain a spatial position, a color, a light intensity, and the like of the photographed object, so as to obtain better imaging quality and photographing experience.

### BRIEF DESCRIPTION OF DRAWINGS

FIG. 1 is a schematic diagram of a structure of an electronic device in some embodiments according to an embodiment of this application;
FIG. 2 is a schematic diagram of a structure of a camera module shown in FIG. 1 in some embodiments;
FIG. 3 is a schematic exploded view of a partial structure of the camera module shown in FIG. 2;
FIG. 4 is a schematic diagram of an internal structure of the camera module shown in FIG. 2;
FIG. 5 is a schematic diagram of an optical path of the camera module shown in FIG. 4;
FIG. 6 is a schematic diagram of a meta-lens and an image sensor of the camera module shown in FIG. 4;
FIG. 7 is a schematic diagram of a structure of a meta-lens shown in FIG. 5 in some embodiments;
FIG. 8 shows an optimization algorithm of an outer diameter size of a pillar of a meta-lens according to this application;
FIG. 9 is a distribution diagram of radiuses of a plurality of pillars that are of a possible meta-lens and that are located in a same row, where the radiuses are obtained by using the optimization algorithm shown in FIG. 8;
FIG. 10 shows a focusing efficiency curve corresponding to the meta-lens in FIG. 9;
FIG. 11 is a schematic diagram of transmission effect corresponding to the meta-lens in FIG. 9;
FIG. 12 is a schematic diagram of a structure of a meta-lens shown in FIG. 5 in some other embodiments;
FIG. 13 is a distribution diagram of radiuses of a plurality of pillars that are of another possible meta-lens and that are located in a same row, where the radiuses are obtained by using the optimization algorithm shown in FIG. 8;
FIG. 14 shows a focusing efficiency curve corresponding to the meta-lens in FIG. 13;
FIG. 15 is a schematic diagram of transmission effect corresponding to the meta-lens in FIG. 13;
FIG. 16 is a schematic diagram of a structure of the meta-lens shown in FIG. 6 in some embodiments;
FIG. 17 is a schematic exploded view of a partial structure of a camera module shown in FIG. 1 in some embodiments;
FIG. 18 is a schematic diagram of an internal structure of the camera module shown in FIG. 17; and
FIG. 19 is a schematic diagram of a structure of a meta-lens of the camera module shown in FIG. 17.

### DESCRIPTION OF EMBODIMENTS

The following describes technical solutions of embodiments in this application with reference to accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an implication or implication of relative importance or an implicit indication of a quantity of indicated technical features. Therefore, a feature limited by "first" or "second" may explicitly or implicitly include one or more features.

In the descriptions of embodiments of this application, it should be noted that, unless otherwise specified and limited, the terms "mount", "connect", "connection" and "dispose" should be understood in a broad sense. For example, the "connection" may be a detachable connection, or an undetachable connection; or may be a direct connection, or may be an indirect connection through an intermediate medium.

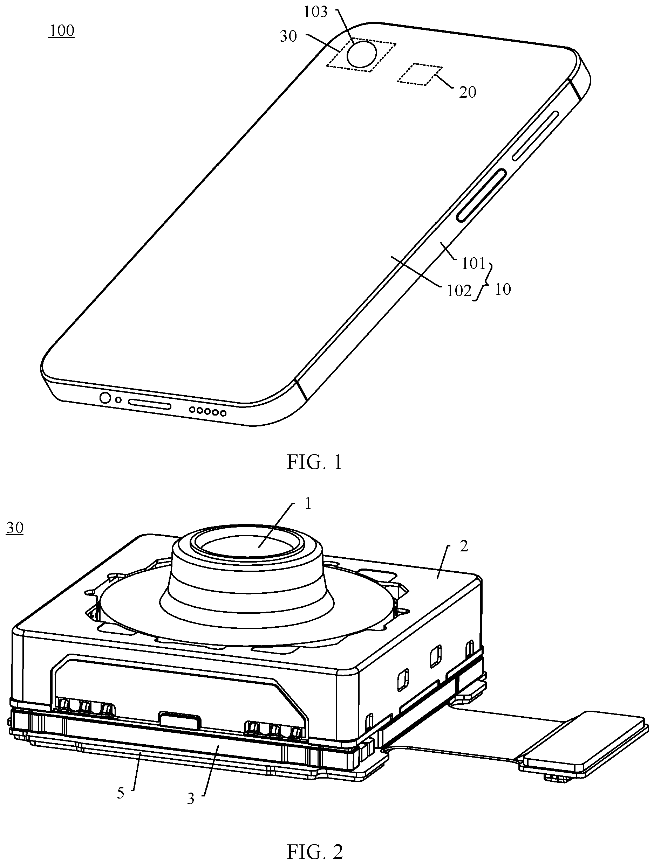

FIG. 1 is a schematic diagram of a structure of an electronic device 100 in some embodiments according to an embodiment of this application. The electronic device 100 may be a device having a camera module, like a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, descriptions are provided by using an example in which the electronic device 100 is the mobile phone.

The electronic device 100 includes a housing 10, a display (not shown in the figure), a processor 20, and a camera module 30. In some embodiments, the housing 10 includes a bezel 101 and a rear cover 102. The bezel 101 and the rear cover 102 may be an integrated structure, or may be assembled to form an integrated structure. The display and the rear cover 102 are respectively mounted on two sides of the bezel 101.

The processor 20 and the camera module 30 are accommodated in the housing 10. The processor 20 is in a communication connection to the camera module 30, and the processor 20 is configured to: obtain image data from the camera module 30 and process the image data. The communication connection between the camera module 30 and the processor 20 may be implemented in an electrical connection manner like cabling or in a coupling manner or the like, for data transmission. It may be understood that the communication connection between the camera module 30 and the processor 20 may alternatively be implemented in another manner for data transmission.

In this embodiment, the rear cover 102 is provided with a camera hole 103, and the camera module 30 may collect light through the camera hole 103, to serve as a rear-facing camera of the electronic device 100. For example, the rear cover 102 includes a cover glass, and the cover glass is mounted on the camera hole 103, to allow light to pass through and prevent dust and water. In some other embodiments, the camera module 30 may alternatively serve as a front-facing camera of the electronic device 100.

In embodiments of this application, the camera module 30 may be a spectral camera, and the spectral camera is configured to record two-dimensional spatial information and spectral information of a photographed object. A user may achieve better photographing experience by using a spectral camera. For example, the user may take photos of various items commonly used in life. In addition to obtaining a very vivid photo by using an image post-processing algorithm (using spectral information to implement calibrating color reproduction), the electronic device 100 may further detect, in combination with the spectral information and a database, information like a material and a corresponding composition proportion (like sugar content, protein, and fat) of the item in a timely manner. This facilitates user's basic necessities of life, and improves user experience. The electronic device 100 may further include another camera module, for example, a wide-angle camera module, a long-focus camera module, or a color main camera module, to conveniently obtain a spatial position, a color, a light intensity, and the like of the photographed object, so as to obtain better imaging quality and photographing experience.

It may be understood that a mounting position of the camera module 30 of the electronic device 100 in the embodiment shown in FIG. 1 is merely an example, and the mounting position of the camera module 30 is not strictly limited in this application. In some other embodiments, the camera module 30 may alternatively be mounted on another position of the electronic device 100. For example, the camera module 30 may be mounted in the upper middle or on the upper right corner of the back of the electronic device 100. In some other embodiments, the electronic device 100 may include a device body and an auxiliary component that may rotate, move, or disassemble relative to the device body, and the camera module 30 may alternatively be disposed on the auxiliary component.

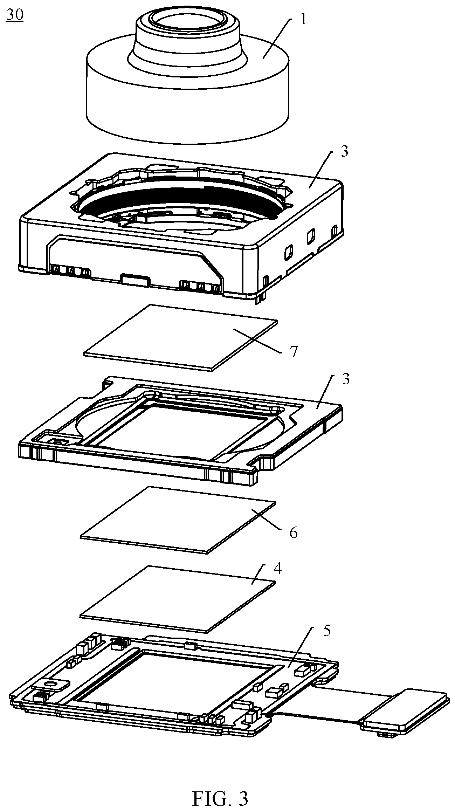

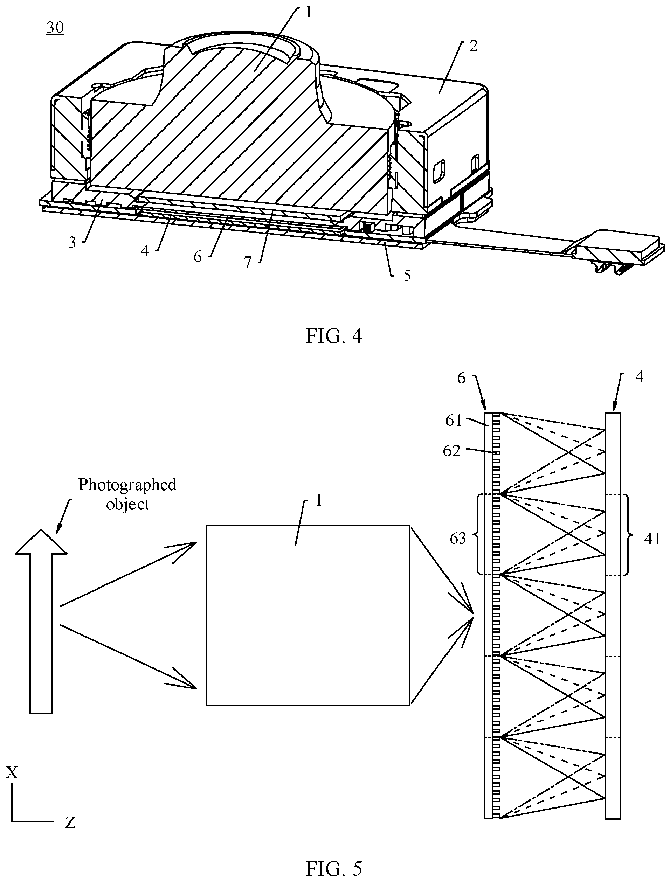

Refer to FIG. 2 to FIG. 4. FIG. 2 is a schematic diagram of a structure of the camera module 30 shown in FIG. 1 in some embodiments. FIG. 3 is a schematic exploded view of a partial structure of the camera module 30 shown in FIG. 2. FIG. 4 is a schematic diagram of an internal structure of the camera module 30 shown in FIG. 2.

In some embodiments, the camera module 30 includes a lens 1, a motor 2, a holder (holder) 3, an image sensor 4, a circuit board 5, a meta-lens 6, and a light filter 7. The lens 1 may include a lens tube and a lens group mounted inside the lens tube. The lens 1 is mounted on the motor 2, and the motor 2 is fastened to one side of the holder 3. The motor 2 may be a focus adjustment motor and/or an optical image stabilization motor, and is configured to drive the lens 1 to move or tilt. In this embodiment, the camera module 30 is an automatic focusing module and/or an optical image stabilization module.

For example, the circuit board 5 is fastened to the other side of the holder 3, that is, the motor 2 and the circuit board 5 are respectively fastened to two sides of the holder 3. The image sensor 4 is located on an image side of the lens 1, and the image sensor 4 may be fastened to the circuit board 5. The image sensor 4 (also referred to as a photosensitive element) is a semiconductor chip. There are hundreds of thousands to millions of photodiodes on a surface of the image sensor 4, and electric charges are generated when the photodiodes are irradiated by light. The image sensor 4 may be a charge-coupled device (charge-coupled device, CCD), or may be a complementary metal-oxide semiconductor (complementary metal-oxide semiconductor, CMOS).

For example, the meta-lens 6 is located between the lens 1 and the image sensor 4, and the meta-lens 6 may be fastened to the holder 3 or the circuit board 5. The meta-lens 6 may be configured to split a light beam with a wavelength range of 450 nm to 950 nm.

For example, the light filter 7 is located between the lens 1 and the meta-lens 6. Light outside the camera module 30 is projected onto the image sensor 4 after passing through the lens 1, the light filter 7, and the meta-lens 6. The light filter 7 is configured to: filter out unnecessary light projected onto the image sensor 4, and prevent the image sensor 4 from generating false colors or ripples, to improve an effective resolution and color reproduction of the image sensor 4. For example, the light filter 7 is configured to filter infrared light. For example, the light filter 7 may include a substrate and a light filter film fastened to the substrate. The substrate may be a sapphire, and a main component of the sapphire is aluminum oxide (Al₂O₃). The light filter film may include an infrared cut-off film. For example, the infrared cut-off film is configured to filter infrared light whose wavelength is greater than 950 nm. In some embodiments, the light filter film may further include an ultraviolet cut-off film, so that the light filter 7 is further configured to filter an ultraviolet ray.

The light filter 7 may be fastened to the holder 3. For example, the meta-lens 6 is also fastened to the holder 3, and the light filter 7 and the meta-lens 6 may be disposed at an interval. For example, the holder 3 includes a first limiting surface and a second limiting surface. The first limiting surface is located between the lens 1 and the second limiting surface, and is spaced from the second limiting surface. The first limiting surface is disposed facing the lens 1, the second limiting surface is disposed away from the lens 1, the light filter 7 is fastened to the first limiting surface, and the meta-lens 6 is fastened to the second limiting surface. In some other embodiments, the light filter 7 may alternatively touch the meta-lens 6. This is not strictly limited in embodiments of this application. In some other embodiments, the meta-lens 6 may alternatively be fastened to the circuit board 5. For example, the camera module 30 further includes a support. The support is fastened to the circuit board 5, the meta-lens 6 is fastened to the support, and the image sensor 4 is located below the meta-lens 6.

In some other embodiments, the camera module 30 may alternatively not include the motor 2, and the lens 1 is directly fastened to the holder 3. In other words, the lens 1 and the circuit board 5 are respectively fastened to two sides of the holder 3. In this embodiment, the camera module 30 is a fixed-focus module.

In this embodiment of this application, the camera module 30 has a length direction, a width direction, and a thickness direction. The width direction is perpendicular to the length direction, and the thickness direction is perpendicular to the width direction and the length direction. An optical axis of the lens 1 is parallel to the thickness direction of the camera module 30. The optical axis of the lens 1 is a line of a center of the lens 1.

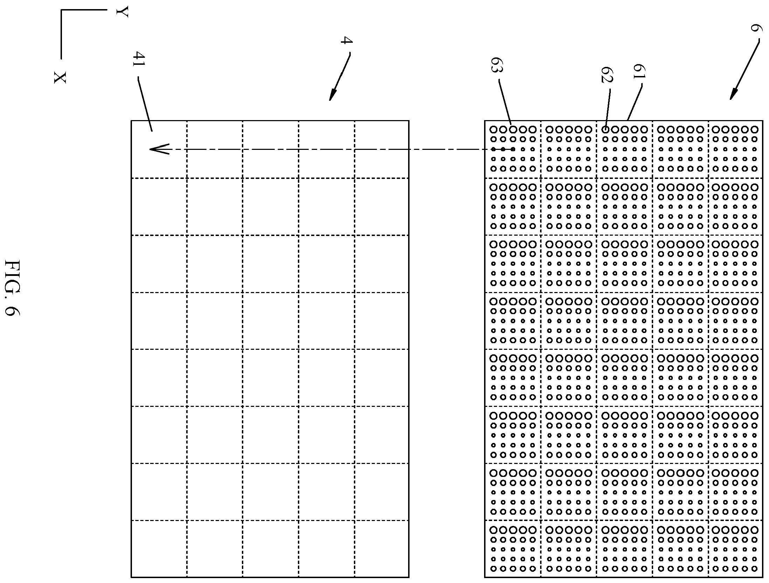

FIG. 5 is a schematic diagram of an optical path of the camera module 30 shown in FIG. 4. FIG. 6 is a schematic diagram of the meta-lens 6 and the image sensor 4 of the camera module 30 shown in FIG. 4.

In some embodiments, the lens 1 converges reflected light of a photographed object on the meta-lens 6. The meta-lens 6 includes a meta-surface (meta-surface) structure. The light resonates on the meta-surface structure to generate a phase delay, to form phase modulation before an emergent wave. Light of different wavelengths is dispersed. Therefore, the meta-lens 6 may split the light into a plurality of sub-light beams based on a band, and then converge the sub-light beams to the image sensor 4. The image sensor 4 converts an optical signal into an electrical signal. The processor 20 of the electronic device 100 processes the electrical signal to obtain two-dimensional spatial information and spectral information of the photographed object.

In this embodiment, the camera module 30 implements light field imaging and multispectral imaging by disposing the meta-lens 6. Therefore, reflected light of the photographed object may be collected by using one lens 1, and a component like a prism does not need to be used as a light splitting apparatus. In this way, image overlapping precision of a photographed multispectral image is high, and imaging quality is high. In addition, an optical system of the camera module 30 has a small quantity of components and simple composition, so that the camera module 30 has low costs and a small volume.

For example, the meta-lens 6 includes a base material 61 and a plurality of pillars 62. The plurality of pillars 62 are fastened to a side that is of the base material 61 and that faces the image sensor 4. Each pillar 62 is a rotationally symmetric structure with a rotation angle of 90°. In this embodiment, the pillar 62 of the meta-lens 6 uses a rotationally symmetric structure with a rotation angle of 90°. Therefore, the optical system of the camera module 30 to which the meta-lens 6 is applied is a polarization-independent system.

In a spectral camera system that depends on a polarization characteristic of a light source, a linear polarizer and a quarter-wave plate need to be additionally disposed on an in-light side of the meta-lens, and a linear polarizer and a quarter-wave plate need to be additionally disposed on an out-light side of the meta-lens. In addition, because a focal length of the meta-lens is very short, the linear polarizer and the quarter-wave plate cannot be directly accommodated between the image sensor and the meta-lens, and an objective lens needs to be additionally disposed on the out-light side of the meta-lens as a relay system to resolve this problem. Therefore, at least two linear polarizers, two quarter-wave plates, and the objective lens need to be additionally disposed in the spectral camera system. This not only greatly reduces a transmittance (lower than 25%) of a light field of the spectral camera system, but also greatly increases complexity of the spectral camera system, thereby hindering integration and application of the spectral camera system in a small electronic device (for example, a portable device).

In this embodiment of this application, because the optical system of the camera module 30 is a polarization-independent system, components such as the linear polarizer and the quarter-wave plate do not need to be disposed in the optical system. Composition of the optical system is simple, and components of the optical system are arranged compactly. Therefore, the camera module 30 has a small volume, and can be well applied to the small electronic device 100.

In addition, because a height of a microstructure (namely, the pillar 62) of a meta-surface structure is at a single-digit micrometer level, an overall volume of the meta-lens 6 is small, and a structural design difficulty of the camera module 30 is reduced, so that a volume of the camera module 30 is small. This facilitates application of the camera module 30 in the miniaturized electronic device 100.

In some embodiments, as shown in FIG. 5 and FIG. 6, the meta-lens 6 has a plurality of light splitting units 63 that are arranged in an array, and each light splitting unit 63 is configured to split a light beam into a plurality of sub-light beams based on a band, and project the sub-light beams onto the image sensor 4. In FIG. 5, some sub-light beams are shown by using different line shapes. For example, the image sensor 4 includes a plurality of light sensing units 41, the plurality of light sensing units 41 are arranged in an array, and the plurality of light sensing units 41 and the plurality of light splitting units 63 are disposed in a one-to-one correspondence. Sub-light beams formed by the light splitting units 63 are projected onto the corresponding light sensing units 41.

For example, refer to FIG. 4. The image sensor 4 and the meta-lens 6 are arranged at an interval in the thickness direction of the camera module 30, the image sensor 4 and the meta-lens 6 are parallel to each other and face each other, and a spacing between the image sensor 4 and the meta-lens 6 is a focal length of the meta-lens 6. Therefore, miniaturization of the camera module 30 is facilitated. The meta-lens 6 may converge light through transverse off-axis focusing, to improve focusing efficiency. In this case, the light sensing unit 41 of the image sensor 4 may deviate for a specific distance relative to the light splitting unit 63 of the meta-lens 6. It may be understood that a size deviated by the light sensing unit 41 relative to the light splitting unit 63 is very small. In some embodiments, the light sensing unit 41 may alternatively face the light splitting unit 63 without being deviated.

In some embodiments, as shown in FIG. 5 and FIG. 6, the plurality of light splitting units 63 are arranged in rows in a first direction X and arranged in columns in a second direction Y One of the first direction X and the second direction Y is parallel to the length direction of the camera module 30, and the other is parallel to the width direction of the camera module 30. The plurality of light sensing units 41 are also arranged in rows in the first direction X and arranged in columns in the second direction Y On a plane on which the first direction X and the second direction Y are located, a shape of the light splitting unit 63 is the same as that of the light sensing unit 41, and a size of the light splitting unit 63 is equal to or greater than a size of the light sensing unit 41.

For example, the light splitting unit 63 is configured to split a light beam into N sub-light beams based on a band, and the light sensing unit 41 corresponding to the light splitting unit 63 includes M pixels, where N and M are both positive integers, and M>N. In this case, the light sensing unit 41 may receive and recognize all sub-light beams, to form relatively complete spectral information of the photographed object. The image sensor 4 is a monochrome sensor. After the meta-lens 6 splits the light beam into a plurality of sub-light beams based on a wavelength, a plurality of pixels of the light sensing unit 41 receive the plurality of sub-light beams, to form a grayscale image. The electronic device 100 forms an image by using pixels of same spectral information, and finally forms a multispectral image. A center spacing between two adjacent pixels may be 1 µm. This is not strictly limited in embodiments of this application. For example, the light splitting unit 63 is configured to split a light beam with a wavelength range of 450 nm to 950 nm, and may split the light beam into 10 to 30 sub-light beams. For example, the light splitting unit 63 may split a light beam into 25 sub-light beams. In this case, a spectral resolution of the camera module 30 is 20 nm. In this embodiment, a recognizable spectral range of the camera module 30 is wide, and covers visible light and near-infrared bands.

In this application, when light splitting and focusing requirements are met, structures of the plurality of light splitting units 63 of the meta-lens 6 may be different. The following describes one of the light splitting units.

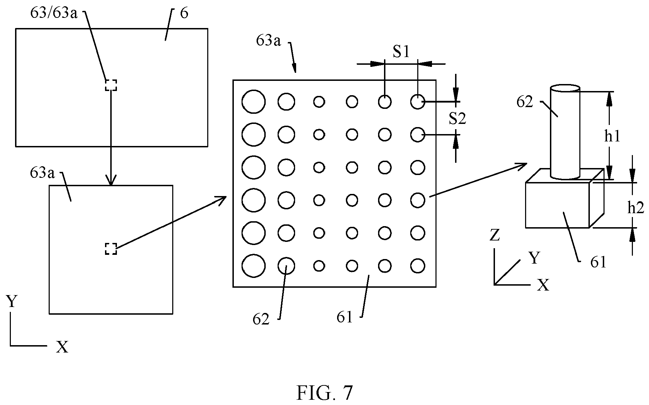

FIG. 7 is a schematic diagram of a structure of the meta-lens 6 shown in FIG. 5 in some embodiments.

In some embodiments, the plurality of light splitting units 63 include a first light splitting unit 63a. A shape of the first light splitting unit 63a on the plane in which the first direction X and the second direction Y are located is a square, and a side length of the first light splitting unit 63a may be within a range from 30 µm to 100 µm, for example, 35 µm, 42 µm, or 58 µm. In this case, the light sensing unit 41 of the image sensor 4 corresponding to the first light splitting unit 63a is also in a positive direction, to receive the sub-light beam emitted by the first light splitting unit 63a.

In the first light splitting unit 63a, the plurality of pillars 62 are arranged in rows in the first direction X, and arranged in columns in the second direction Y Each pillar 62 extends in a third direction Z, and the third direction Z is perpendicular to the first direction X and the second direction Y A shape of a cross section of the pillar 62 may be a circle, and the pillar 62 is in a shape of a cylinder. At least some of the pillars 62 located in a same row have different outer diameters (namely, diameters of the pillars 62), and the plurality of pillars 62 located in a same column have a same outer diameter. The first light splitting unit 63a is configured to: split a light beam into a plurality of sub-light beams in the first direction X based on a band, and project the sub-light beams onto the image sensor 4. The sub-light beams are not split in the second direction Y

In the first light splitting unit 63a, the plurality of pillars 62 are arranged at an equal spacing in the first direction X, and the spacing S1 is within a range of 150 nm to 300 nm, for example, 180 nm, 200 nm, and 235 nm. The plurality of pillars 62 are arranged at an equal spacing in the second direction Y, and the spacing S2 is within a range of 150 nm to 300 nm, for example, 180 nm, 200 nm, and 235 nm. A spacing between two pillars 62 is a spacing between centers of the two pillars 62.

A height h1 of the pillar 62 in the third direction Z may be within a range of 500 nm to 2000 nm, for example, 800 nm. The outer diameter of the pillar 62 may be within a range of 40 nm to 200 nm. The pillar 62 may be made of a semiconductor material, for example, gallium nitride, titanium dioxide, or silicon nitride.

The base material 61 of the meta-lens 6 may be made of a silicon dioxide material or a sapphire. A height h2 of the base material 61 in the third direction Z may be within a range of 100 µm to 500 µm, for example, 180 µm, 210 µm, or 320 µm, and the third direction Z is perpendicular to the first direction X and the second direction Y Because the height of the pillar 62 of the meta-lens 6 is very small, a main of the meta-lens 6 is mainly formed by a thickness of the base material 61. When the thickness of the base material 61 is less than 500 µm, the thickness of the meta-lens 6 is very small. This facilitates miniaturization of the camera module 30.

In this embodiment of this application, outer diameter sizes of the plurality of pillars 62 that are of the first light splitting unit 63a and that are located in the same row are designed, so that the first light splitting unit 63a may split a light beam into a plurality of sub-light beams based on a band, and the plurality of sub-light beams are respectively projected, in the first direction X, onto different positions of the light sensing unit 41 of the corresponding image sensor 4.

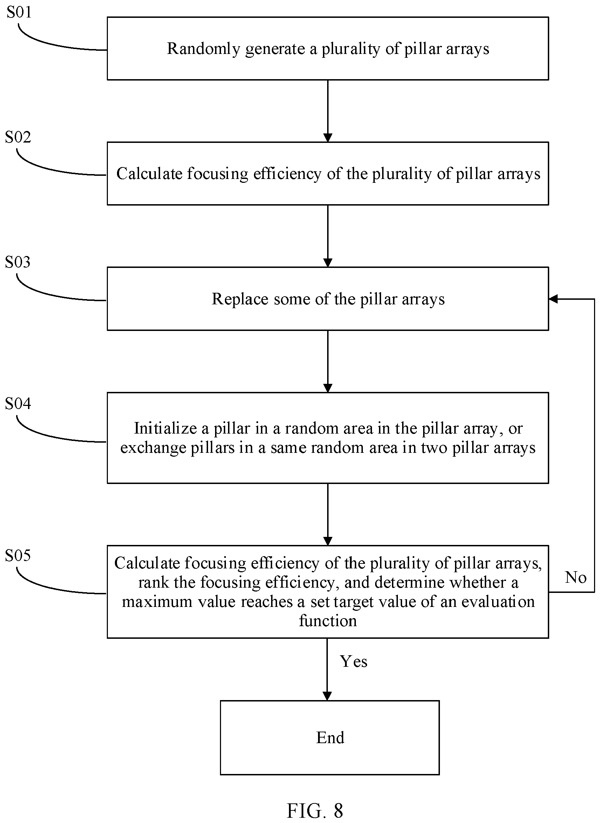

FIG. 8 shows an optimization algorithm of an outer diameter size of the pillar 62 of the meta-lens 6 according to this application.

In some embodiments, outer diameter sizes of the plurality of pillars 62 that are of the first light splitting unit 63a and that are located in a same row may be obtained by using a genetic algorithm. Details are as follows.

First, a finite difference time domain (finite difference time domain, FDTD) software is used to scan cylindrical subunit structures (including the pillar 62 and a part of the base material 61 corresponding to the pillar 62) having diameters within a range of 40 nm to 200 nm, to obtain a transmittance and a phase compensation amount when a light field passes through different cylindrical subunit structures. After the transmittance and the phase compensation amount are obtained, an outer diameter distribution of the plurality of pillars 62 of the meta-lens 6 is optimized by using a genetic algorithm.

For example, a process of the genetic algorithm embodiment is as follows:
Step S01: Randomly generate a plurality of pillar arrays (namely, a population). Each pillar array includes a plurality of pillars arranged in an array. The plurality of pillars are arranged in rows at an equal spacing of 200 nm in a first direction. The plurality of pillars in a same row are arranged in columns at an equal spacing of 200 nm in a second direction. A quantity of pillars arranged in a same row is 210, and outer diameters of at least some of the 210 pillars are not equal. A quantity of pillars arranged in a same column is 210, and outer diameters of all pillars are equal.
Step S02: Calculate focusing efficiency of a plurality of pillar arrays. The angular spectrum theory is used to calculate efficiency of focusing incident light of different wavelengths to a specific position on the image sensor after the light of different wavelengths passes through the meta-lens. An average value of the focusing efficiency at different wavelengths is used as an evaluation function to calculate the focusing efficiency of the plurality of pillar arrays. The transmittances and the phase compensation amounts of different cylinder subunit structures are used as inputs of the angular spectrum theory.
Step S03: Replace some of the pillar arrays. The focusing efficiency of the plurality of pillar arrays is ranked based on a size, a pillar array with focusing efficiency ranking lower is removed in a specific proportion, and then a pillar array with focusing efficiency ranking higher is copied in a specific proportion for replacement, so that a total quantity of pillar arrays remains unchanged.
Step S04: Initialize a pillar in a random area in the pillar array, or exchange pillars in a same random area in two pillar arrays. A process of initializing an outer diameter of a pillar in a random area in the pillar array may be referred to as "gene" mutation, and a process of exchanging pillars in a random same area in any two pillar arrays may be referred to as "gene" hybridization. Through "gene" mutation and hybridization, it is possible to generate a better individual in the population and a more efficient pillar array.
Step S05: Calculate focusing efficiency of the plurality of pillar arrays, rank the focusing efficiency, and determine whether a maximum value reaches a set target value of the evaluation function. If the set target value of the evaluation function is reached, the optimization process is terminated. If the set target value of the evaluation function is not reached, go to step S03 to continue the optimization until the target value is reached.

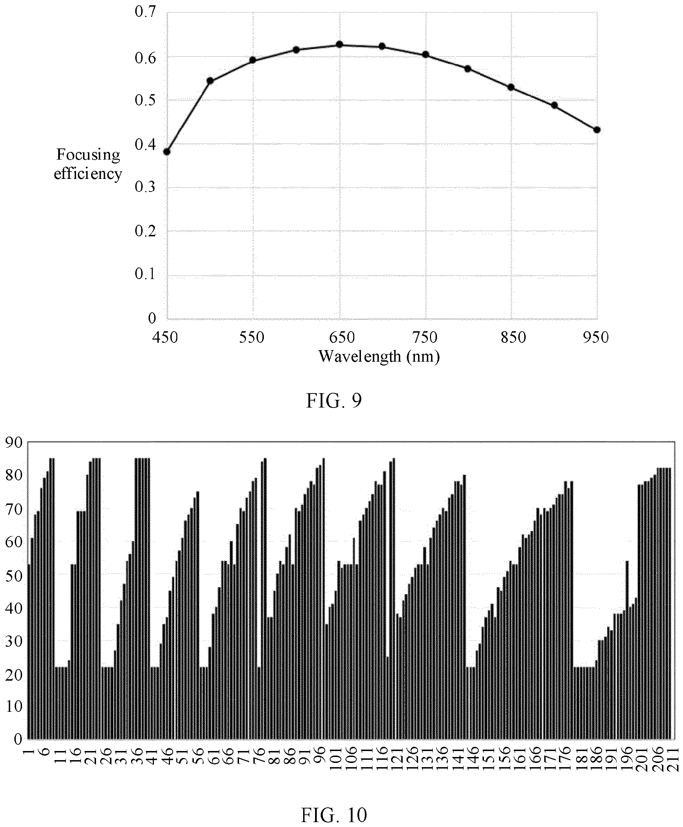

FIG. 9 is a distribution diagram of radiuses of a plurality of pillars 62 that are of a possible meta-lens 6 and that are located in a same row, where the radiuses are obtained by using the optimization algorithm shown in FIG. 8. In FIG. 9, a horizontal coordinate is a pillar arrangement sequence number of the meta-lens 6 in a first direction, and a vertical coordinate is a corresponding radius. As shown in FIG. 9, in some embodiments, in the first light splitting unit 63a, outer diameter (namely, twice a radius) sizes of the plurality of pillars 62 in a same row are in an oblique-trapezoid aperiodic distribution. In the plurality of pillars 62 located in the same row, outer diameter sizes of more than half of the pillars 62 meet the oblique-trapezoid aperiodic distribution. In this case, it may be considered that the outer diameter sizes of the plurality of pillars 62 in the same row are in the oblique-trapezoid aperiodic distribution.

FIG. 10 shows a focusing efficiency curve corresponding to the meta-lens 6 in FIG. 9. In FIG. 10, horizontal coordinates are wavelengths (nm), and vertical coordinates are focusing efficiency at different optical wavelengths. It may be learned from FIG. 10 that the meta-lens 6 has different focusing efficiency for different wavelength ranges in a band of 450 nm to 950 nm: Focusing efficiency in a band of 550 nm to 750 nm is relatively high, and focusing efficiency in other bands is relatively low. However, overall average efficiency may reach 55%, which is far higher than that of a spectral camera system based on a polarization-dependent design. Therefore, the optical system of the camera module 30 in this embodiment has high focusing efficiency.

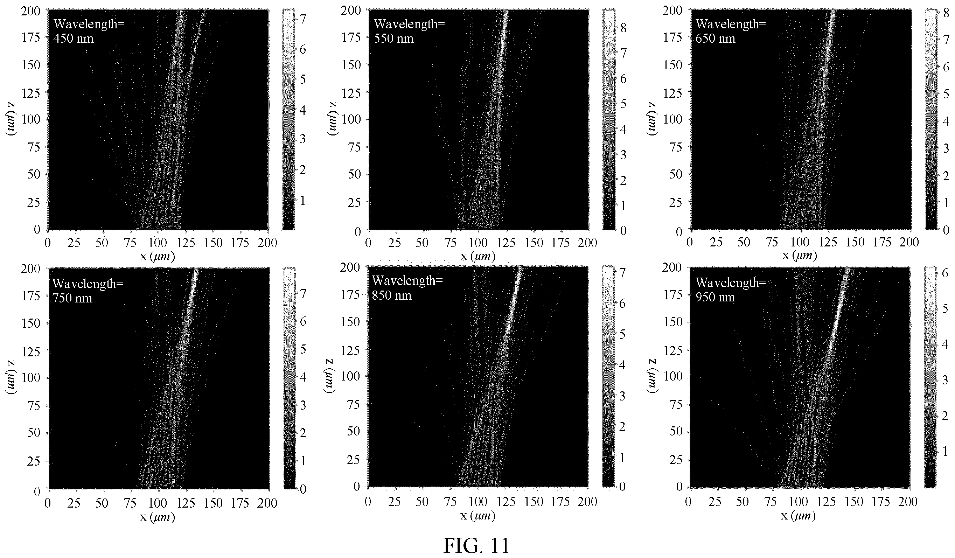

FIG. 11 is a schematic diagram of transmission effect corresponding to the meta-lens 6 in FIG. 9. FIG. 11 shows transmission effect of a light beam with a wavelength of 450 nm, a light beam with a wavelength of 550 nm, a light beam with a wavelength of 650 nm, a light beam with a wavelength of 750 nm, a light beam with a wavelength of 850 nm, and a light beam with a wavelength of 950 nm corresponding to the meta-lens 6 in FIG. 9. In FIG. 11, a horizontal coordinate is a coordinate in a first direction, and a vertical coordinate is a coordinate in a third direction. For example, the meta-lens 6 uses a transverse off-axis focusing manner, to improve focusing efficiency. As shown in FIG. 11, after passing through the meta-lens 6, a light field is focused at a focal plane z=200 um, transverse off-axis focusing occurs on light fields of all wavelengths, and sub-light beams of different bands are staggered in focusing in the first direction.

A transverse off-axis distance of a focused light beam passing through the meta-lens 6 is greater than 0, and may be less than or equal to 20 µm.

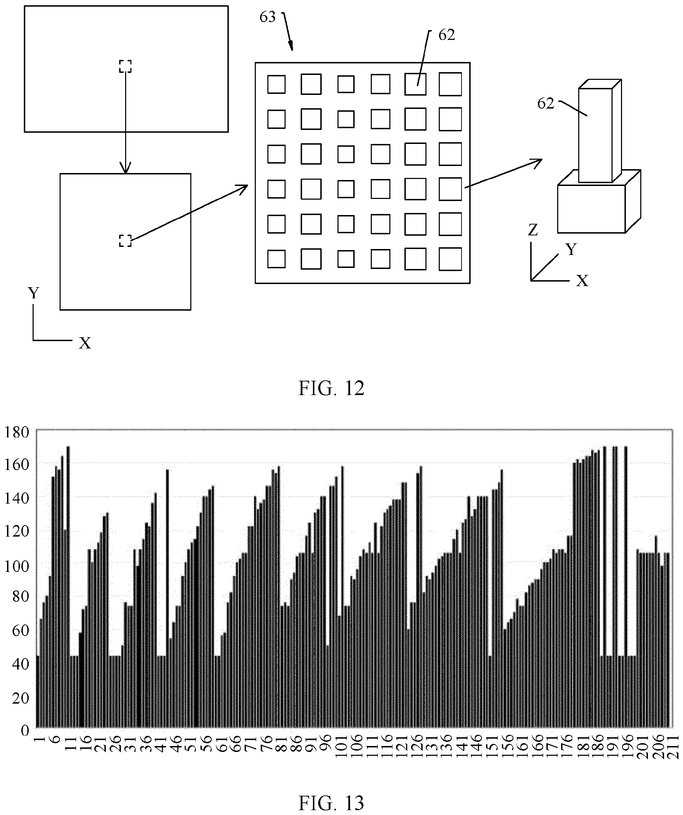

FIG. 12 is a schematic diagram of a structure of the meta-lens 6 shown in FIG. 5 in some embodiments. This embodiment includes most features of the foregoing embodiments. A main difference between this embodiment and the foregoing embodiments lies in that: In the first light splitting unit 63a, a shape of a cross section of the pillar 62 may be a square, and the pillar 62 is a square pillar. An outer diameter of the pillar 62 is a side length of the pillar 62.

Outer diameters of a plurality of pillars 62 arranged in a same row may be obtained by using the optimization algorithm corresponding to FIG. 8. In this embodiment, for another design of the first light splitting unit 63a, refer to the foregoing embodiment. Details are not described herein again.

FIG. 13 is a distribution diagram of radiuses of a plurality of pillars 62 that are of another possible meta-lens 6 and that are located in a same row, where the radiuses are obtained by using the optimization algorithm shown in FIG. 8.

In FIG. 13, a horizontal coordinate is a pillar arrangement sequence number of the meta-lens 6 in a first direction, and a vertical coordinate is a corresponding radius. As shown in FIG. 13, in some embodiments, in the first light splitting unit 63a, outer diameter (namely, twice a radius) sizes of the plurality of pillars 62 in a same row are in an oblique-trapezoid aperiodic distribution.

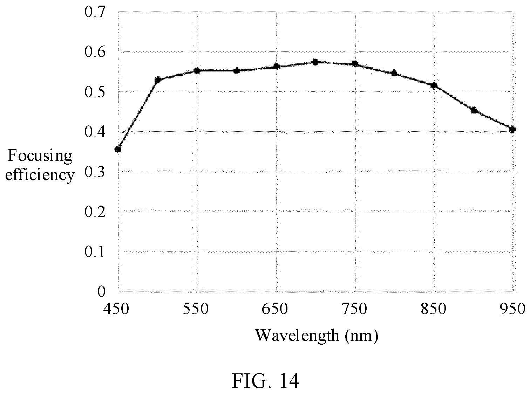

FIG. 14 shows a focusing efficiency curve corresponding to the meta-lens 6 in FIG. 13. In FIG. 14, horizontal coordinates are wavelengths (nm), and vertical coordinates are focusing efficiency at different optical wavelengths. It may be learned from FIG. 14 that the meta-lens 6 has different focusing efficiency for different wavelength ranges in a band of 450 nm to 950 nm: Focusing efficiency in a band of 500 nm to 800 nm is relatively high, and focusing efficiency in edge bands is relatively low. However, overall average efficiency may reach 51%, which is far higher than that of a spectral camera system based on a polarization-dependent design. Therefore, the optical system of the camera module 30 in this embodiment has high focusing efficiency.

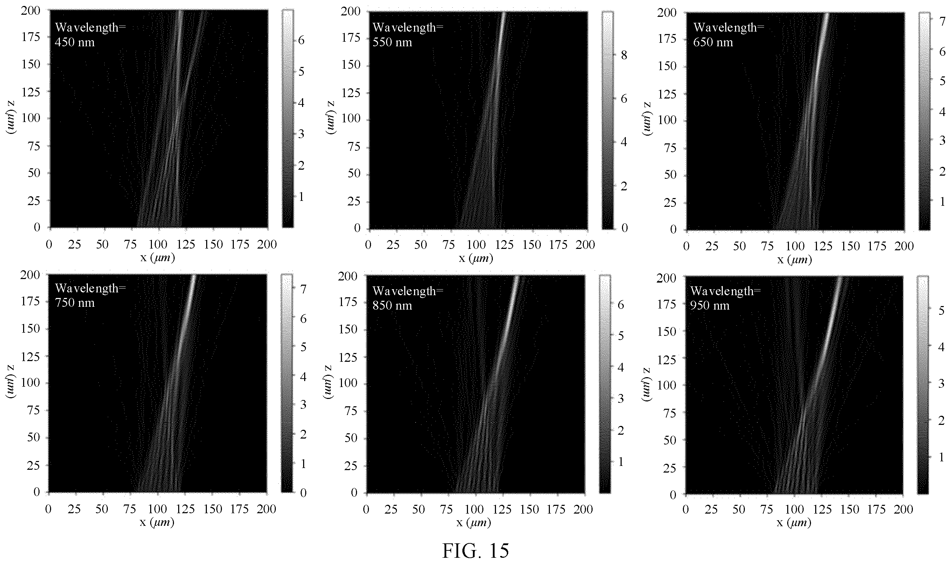

FIG. 15 is a schematic diagram of transmission effect corresponding to the meta-lens 6 in FIG. 13. FIG. 15 shows transmission effect of a light beam with a wavelength of 450 nm, a light beam with a wavelength of 550 nm, a light beam with a wavelength of 650 nm, a light beam with a wavelength of 750 nm, a light beam with a wavelength of 850 nm, and a light beam with a wavelength of 950 nm corresponding to the meta-lens 6 in FIG. 13. In FIG. 15, a horizontal coordinate is a coordinate in a first direction, and a vertical coordinate is a coordinate in a third direction. For example, the meta-lens 6 uses a transverse off-axis focusing manner, to improve focusing efficiency. As shown in FIG. 15, after passing through the meta-lens 6, a light field is focused at a focal plane z=200 um, transverse off-axis focusing occurs on light fields of all wavelengths, and sub-light beams of different bands are staggered in focusing in the first direction.

A transverse off-axis distance of a focused light beam passing through the meta-lens 6 is greater than 0, and may be less than or equal to 20 µm.

In some other embodiments, in the first light splitting unit 63a, a shape of a cross section of the pillar 62 may alternatively be a shape that meets rotation symmetry and has a rotation angle of 90°, for example, an octagon. This is not strictly limited in embodiments of this application. When the shape of the cross section of the pillar 62 is an octagon, the outer diameter of the pillar 62 is a spacing between two opposite sides.

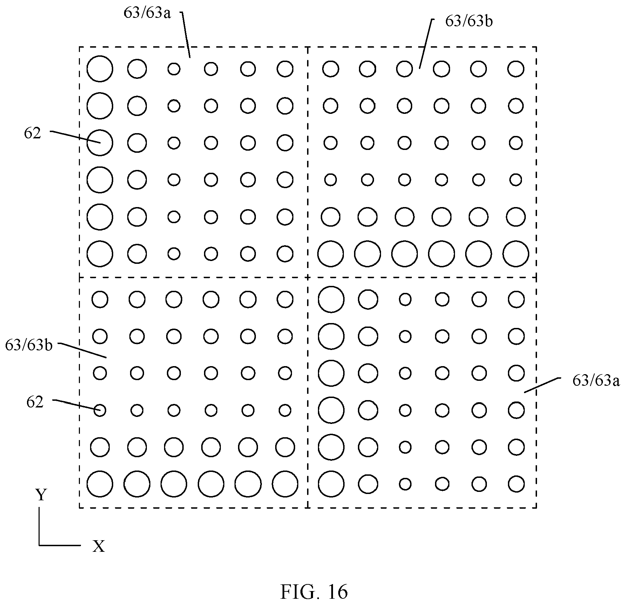

FIG. 16 is a schematic diagram of a structure of the meta-lens 6 shown in FIG. 6 in some embodiments.

In some embodiments, the plurality of light splitting units 63 of the meta-lens 6 further include a second light splitting unit 63b. The second light splitting unit 63b is configured to: split a light beam into a plurality of sub-light beams in the second direction Y based on a band, and project the sub-light beams onto the image sensor 4. In the second light splitting unit 63b, the plurality of pillars 62 are arranged in rows in the first direction X and arranged in columns in the second direction Y Each pillar 62 is a rotationally symmetric structure with a rotation angle of 90°. The plurality of pillars 62 located in a same row have a same outer diameter, and at least some pillars 62 located in a same column have different outer diameters. For a structural design of the second light splitting unit 63b, refer to the first light splitting unit 63a. A difference between the first light splitting unit 63a and the second light splitting unit 63b lies in a different light splitting direction. For example, the second light splitting unit 63b may use a structure obtained after the first light splitting unit 63a is rotated by 90°.

There may be a plurality of first light splitting units 63a, and a plurality of second light splitting units 63b. The plurality of first light splitting units 63a and the plurality of second light splitting units 63b may be arranged in a staggered manner, including but not limited to: arranged in a staggered manner in the first direction X and/or arranged in a staggered manner in the second direction Y

In some other embodiments, light splitting directions of the plurality of light splitting units 63 of the meta-lens 6 may alternatively be consistent. This is not strictly limited in embodiments of this application.

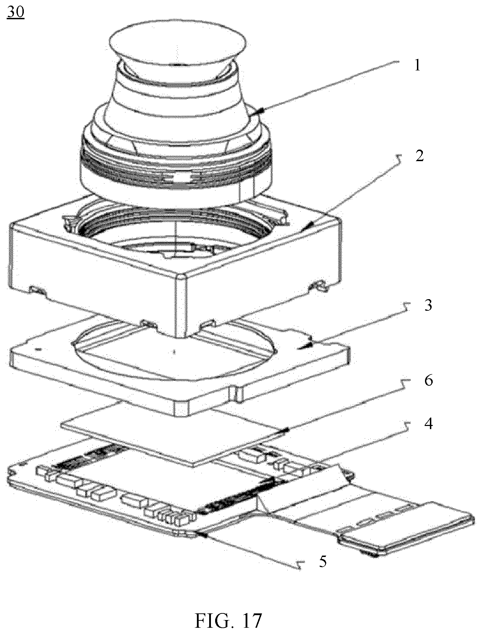

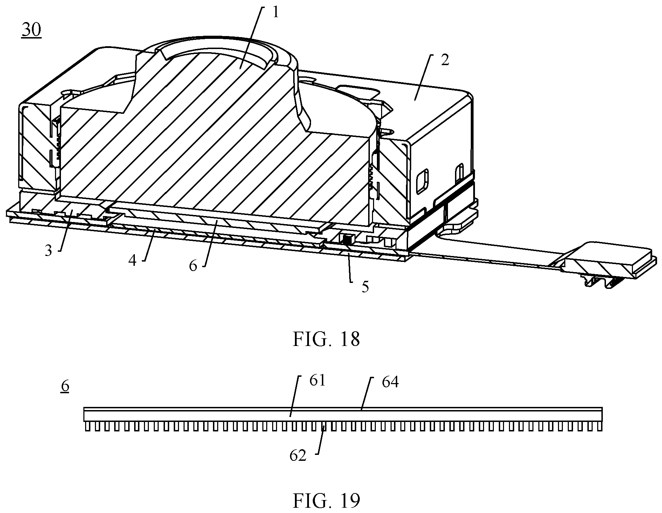

Refer to FIG. 17 to FIG. 19 together. FIG. 17 is a schematic exploded view of a partial structure of the camera module 30 shown in FIG. 1 in some embodiments. FIG. 18 is a schematic diagram of an internal structure of the camera module 30 shown in FIG. 17. FIG. 19 is a schematic diagram of a structure of the meta-lens 6 of the camera module 30 shown in FIG. 17. The camera module 30 in this embodiment includes most of the technical features of the camera module 30 in the foregoing embodiments, and most content that is the same between the two is not described in detail again. A main difference between the two lies in that: The camera module 30 in this embodiment is not separately provided with a light filter, and the meta-lens 6 integrates a light filtering function.

For example, the camera module 30 includes a lens 1, a motor 2, a holder (holder) 3, an image sensor 4, a circuit board 5, and a meta-lens 6. The meta-lens 6 includes a base material 61 and a plurality of pillars 62. The plurality of pillars 62 are fastened to a side that is of the base material 61 and that faces the image sensor 4. Each pillar 62 is a rotationally symmetric structure with a rotation angle of 90°. The meta-lens 6 further includes a light filter film 64, and the light filter film 64 is fastened to a side that is of the base material 61 and that is disposed away from the plurality of pillars 62. The light filter film 64 is configured to: filter out unnecessary light projected onto the image sensor 4, and prevent the image sensor 4 from generating false colors or ripples, to improve an effective resolution and color reproduction of the image sensor 4. For example, the light filter film 64 is configured to filter infrared light. The light filter film 64 may include an infrared cut-off film, configured to filter infrared light whose wavelength is greater than 950 nm. In some embodiments, the light filter film 64 may further include an ultraviolet cut-off film, to filter an ultraviolet ray. In this embodiment, because the meta-lens 6 integrates a light filtering function when implementing light splitting and focusing functions, no light filter may be disposed in the camera module 30. This simplifies composition of components of the camera module 30, enables a thickness of the camera module 30 to be small, and facilitates miniaturization of the camera module 30 and an electronic device 100 to which the camera module 30 is applied.

In this embodiment of this application, the camera module implements a spectral camera system based on a polarization-independent meta-lens. Compared with a conventional camera module, the camera module may further obtain, in addition to information like an intensity, a position, and a color of incident light, spectral information of a photographed object. The camera module uses a meta-lens to implement multispectral imaging, and has a wide recognizable spectrum of 450 nm to 950 nm, covering visible light and near-infrared bands. In addition, the camera module has good time performance, and may obtain spectral information of an object through photographing once. In addition, the camera module has a simple structure, and has advantages such as miniaturization, easy integration, low power consumption, and low costs, and is applicable to a terminal device like a smartphone.

In some other embodiments, a meta-surface structure of the meta-lens is designed, so that the camera module may further implement more application scenarios, such as polarization imaging and holographic photography.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A camera module (30), comprising a lens (1), an image sensor (4), and a meta-lens (6), wherein the image sensor (4) is located on an image side of the lens (1), the meta-lens (6) is located between the lens (1) and the image sensor (4), the meta-lens (6) comprises a base material (61) and a plurality of pillars (62), the plurality of pillars (62) are fastened on a side that is of the base material (61) and that faces the image sensor (4), and each pillar (62) is a rotationally symmetric structure with a rotation angle of 90°;
the meta-lens (6) is provided with a plurality of light splitting units (61) arranged in an array, the plurality of light splitting units (61) comprise a first light splitting unit (61a), and the first light splitting unit (61a) is configured to: split a light beam into a plurality of sub-light beams in a first direction based on a band, and project the sub-light beams onto the image sensor (4); and
in the first light splitting unit (61a), the plurality of pillars (62) are arranged in rows in the first direction and arranged in columns in a second direction, the second direction is perpendicular to the first direction, at least some of the pillars (62) located in a same row have different outer diameters, and the plurality of pillars (62) located in a same column have a same outer diameter.

2. The camera module (30) according to claim 1, wherein in the first light splitting unit (61a), the pillar (62) extends in a third direction, the third direction is perpendicular to the first direction and the second direction, and a shape of a cross section of the pillar (62) is a circle, a square, or an octagon.

3. The camera module (30) according to claim 1, wherein in the first light splitting unit (61a), the plurality of pillars (62) are arranged at an equal spacing within a range of 150 nm to 300 nm in the first direction, and the plurality of pillars (62) are arranged at an equal spacing within a range of 150 nm to 300 nm in the second direction; or
a height of the pillar (62) in a third direction is within a range of 500 nm to 2000 nm, and the third direction is perpendicular to the first direction and the second direction; or
the outer diameter of the pillar (62) is within a range of 40 nm to 200 nm; or
the pillar (62) is made of a semiconductor material.

4. The camera module (30) according to claim 3, wherein in the first light splitting unit (61a), outer diameter sizes of the plurality of pillars (62) in a same row are in an oblique-trapezoid aperiodic distribution.

5. The camera module (30) according to claim 1, wherein the base material (61) is made of a silicon dioxide material or sapphire; or a height of the base material (61) in a third direction is within a range of 100 µm to 500 µm, and the third direction is perpendicular to the first direction and the second direction.

6. The camera module (30) according to any one of claims 1 to 5, wherein the plurality of light splitting units (61) further comprise a second light splitting unit (61b), the second light splitting unit (61b) is configured to: split a light beam into a plurality of sub-light beams in the second direction based on a band, and project the sub-light beams onto the image sensor (4); and
in the second light splitting unit (61b), the plurality of pillars (62) are arranged in rows in the first direction and arranged in columns in the second direction, each pillar (62) is a rotationally symmetric structure with a rotation angle of 90°, the plurality of pillars (62) located in a same row have a same outer diameter, and at least some pillars (62) located in a same column have different outer diameters.

7. The camera module (30) according to any one of claims 1 to 6, wherein the meta-lens (6) further comprises a light filter film (64), the light filter film (64) is fastened to a side that is of the base material (61) and that faces away from the plurality of the pillars (62), and the light filter film (64) is configured to filter infrared light.

8. The camera module (30) according to any one of claims 1 to 6, wherein the camera module (30) further comprises a light filter (7), the light filter (7) is located between the lens (1) and the meta-lens (6), and the light filter (7) is configured to filter infrared light.

9. The camera module (30) according to any one of claims 1 to 8, wherein the image sensor (4) comprises a plurality of light sensing units (41), the plurality of light sensing units (41) are disposed in a correspondence with the plurality of light splitting units (61), and sub-light beams formed by the light splitting unit (61) are projected onto the corresponding light sensing unit (41).

10. The camera module (30) according to claim 9, wherein the light splitting unit (61) is configured to split a light beam into N sub-light beams based on a band, and the light sensing unit (41) corresponding to the light splitting unit (61) comprises M pixels, wherein N and M are both positive integers, and M>N.

11. The camera module (30) according to any one of claims 1 to 10, wherein the light splitting unit (61) is configured to split a light beam with a wavelength range of 450 nm to 950 nm into 10 to 30 sub-light beams.

12. The camera module (30) according to any one of claims 1 to 10, wherein the camera module (30) further comprises a motor (2), a holder (3), and a circuit board (5), the motor (2) and the circuit board (5) are respectively fastened to two sides of the holder (3), the lens (1) is mounted on the motor (2), the image sensor (4) is fastened to the circuit board (5), and the meta-lens (6) is fastened to the holder (3) or the circuit board (5); or
the camera module (30) further comprises a holder (3) and a circuit board (5), wherein the lens (1) and the circuit board (5) are respectively fastened to two sides of the holder (3), the image sensor (4) is fastened to the circuit board (5), and the meta-lens (6) is fastened to the holder (3) or the circuit board (5).

13. An electronic device (100), comprising a processor (20) and the camera module (30) according to any one of claims 1 to 12, wherein the processor (20) is in a communication connection to the camera module (30), and the processor (20) is configured to: obtain image data from the camera module (30), and process the image data.
